# EUROPEAN PATENT APPLICATION

(11) **EP 4 365 322 A1**
(43) Date of publication of application: **08.05.2024**
(21) Application number: 21947366.7
(22) Date of filing: 30.06.2021
(51) Int. Cl.: C22B 47/00

(54) **MANGANESE ALLOY PRODUCTION METHOD AND PRODUCTION DEVICE THEREFOR**

(71) Applicant: Nippon Denko Co.,Ltd., Tokyo 103-8282 (JP)
(72) Inventor: YAMADA, Noriaki, Tokyo 103-8282 (JP); KATAYAMA, Shingo, Tokyo 103-8282 (JP)
(74) Representative: Crow, Martin
(86) International application number: PCT/JP2021/024799
(87) International publication number: WO 2023/276057

(57) **Abstract**

An object of the present invention is to provide a method for producing a CO₂ emission-reducing manganese-based alloy that enables CO₂ emission reduction in the production of a manganese-based alloy, and an apparatus for producing the same.

Provided is a method for producing a CO₂ emission-reducing manganese-based alloy, including a step (1) of subjecting manganese ore to hydrogen-reduction by heating to produce reduced manganese ore.

## Description

### TECHNICAL FIELD

The present invention relates to a method for producing a manganese-based alloy and an apparatus for producing the same.

### BACKGROUND ART

A manganese-based alloy, for example, ferromanganese is produced by charging manganese ore with a reducing material (reductant) such as coke into a blast furnace or an arc furnace (Submerged Arc Furnace, SAF) and heating them to reduce manganese or iron in the ore. It is basically considered that, in a blast furnace method, coke is used as a heat source and a reductant, but in an submerged arc furnace method, coke is used as a reductant with electric power used as a heat source.

Conventionally, technical development has been made in manganese-based alloy production from the viewpoint how to efficiently produce a manganese-based alloy. For example, Patent Literatures 1 and 2 disclose a technique of charging a reductant such as silicon-containing alloy iron or metal aluminum in order to further reduce and extract manganese remaining in a slag. Patent Literatures 3 to 6 disclose a technique in which manganese ore is preliminarily reduced in advance with carbon monoxide CO gas or coke generated by a blast furnace method or an arc furnace method and then charged into a blast furnace or an arc furnace, instead of directly charging manganese ore into a blast furnace or an arc furnace.

Non-Patent Literature 1 discloses a preliminary treatment of preheating and preliminary reduction in the background that inexpensive coal has been used from expensive electric power in the production of ferromanganese, and discloses a series of basic studies on each reduction reaction process with carbon monoxide or hydrogen gas as a part of studies on reduction of manganese ore with carbon.

### Citation List

### Patent Literatures

Patent Literature 1: JP 2006-161079 A
Patent Literature 2: JP S59-222552 A
Patent Literature 3: JP S63-195244 A
Patent Literature 4: JP S59-215458 A
Patent Literature 5: JP S38-4456 B
Patent Literature 6: JP S38-12811 B

### Non-Patent Literature

Non-Patent Literature 1: Kiyoshi Terayama et al., Thermal Measurement, 18(3), 164 (1991)

### SUMMARY OF INVENTION

### Technical Problem

As described above, in the production of the manganese-based alloy, the technique of efficiently producing a manganese-based alloy has been developed so far, but it has been found that an attempt to reduce CO₂ has not been made on the premise that carbon materials such as coke are used as a reductant when the manganese ore is reduced.

In fact, even in Patent Literatures 1 to 6 and the prior art documents related to the production of a manganese-based alloy other than Patent Literatures 1 to 6, there is no technical development for the purpose of reducing CO₂ emission, and there is no description or suggestion regarding the technical development. In conventional technical development related to the production of a manganese-based alloy, CO₂ emission is indirectly reduced to some extent by increasing efficiency, but from the viewpoint of reducing CO₂ generation, there has been no attempt to reduce the amount of carbon materials serving as a CO₂ generation source or to reduce the amount thereof to zero.

For example, as in Non-Patent Literature 1, there is a basic study on the reduction behavior of manganese ore using a reducing material such as carbon monoxide or hydrogen other than carbon, but in the process of producing a manganese-based alloy by reducing to metal manganese, there is only a proposal that reduction is performed using natural gas using methane CH₄, and there is no disclosure or suggestion regarding utilization from the viewpoint of reducing CO₂ generation.

In the description of Fig. 4 of Patent Literature 4, since surplus gases (derived from coke) of a ferromanganese furnace and Si and Mn furnaces are used to form preliminary reduced pellets, the CO₂ reduction effect of the present invention is not obtained. Patent Literature 4 is considered to have an effect of reducing the electric power consumption rate, but has no effect of reducing a carbon material.

Therefore, the present inventors have found that it is necessary to develop a technique for actively reducing CO₂ emission in the production of a manganese-based alloy.

The present invention has been made in view of the above problems, and an object thereof is to provide a method for producing a manganese-based alloy that enables CO₂ emission reduction in the production of a manganese-based alloy.

### Solution to Problem

Preferred embodiments of the present invention for solving at least one of the above problems will be described below.
1. A method for producing a manganese-based alloy, including a step (1) of subjecting manganese ore to hydrogen-reduction by heating to produce reduced manganese ore.
2. The method for producing a manganese-based alloy according to 1., further including a step (2) of charging the reduced manganese ore together with a carbon material into an arc furnace to perform smelting, and then performing slag-metal separation.
3. The method for producing a manganese-based alloy according to 1. or 2., further including a step (3) of smelting a part or all of the reduced manganese ore by molten oxide electrolysis, and then performing slag-metal separation.
4. The method for producing a manganese-based alloy according to any one of 1. to 3., wherein a manganese oxidation degree of the reduced manganese ore is 1.6 or less.
5. The method for producing a manganese-based alloy according to 4., wherein the manganese oxidation degree of the reduced manganese ore is 1.1 or less.
6. The method for producing a manganese-based alloy according to any one of 1. to 5., wherein a proportion of hydrogen in a gas of a reductant in the hydrogen reduction is more than 70 mol%.
7. The method for producing a manganese-based alloy according to any one of 2. to 6., wherein an amount of Mn in the slag is 10% to 29%.
8. The method for producing a manganese-based alloy according to any one of 1. to 7., wherein the heating includes electric heating.
9. The method for producing a manganese-based alloy according to any one of 1. to 8., wherein the heating includes heating by hydrogen burning.
10. The method for producing a manganese-based alloy according to any one of 2. to 9., further including a step (4) of reducing at least a part of manganese oxide contained in a molten slag by-produced in the step (2) with a reductant containing silicon-containing ferroalloy or metal aluminum or a reductant containing silicon-containing ferroalloy and metal aluminum.
11. The method for producing a manganese-based alloy according to any one of 1. to 10., further including a step (5) of reducing a part or all of the reduced manganese ore with a reductant containing silicon-containing ferroalloy or metal aluminum or a reductant containing silicon-containing ferroalloy and metal aluminum to perform smelting, and then performing slag-metal separation.
12. The method for producing a manganese-based alloy according to any one of 2. to 11., wherein a part or all of the carbon material is green carbon.
13. The method for producing a manganese-based alloy according to any one of 2. to 12., wherein a slag forming flux is charged in the step (2) .
14. An apparatus for producing a manganese-based alloy, including a means (1) for subjecting manganese ore to hydrogen-reduction by heating.
15. The apparatus for producing a manganese-based alloy according to 14., further including a means (2) for charging the reduced manganese ore together with a carbon material into an arc furnace to perform smelting, and then performing slag-metal separation.
16. The apparatus for producing a manganese-based alloy according to 14. or 15., further including a means (3) for smelting a part or all of the reduced manganese ore by molten oxide electrolysis, and then performing slag-metal separation.
17. The apparatus for producing a manganese-based alloy according to any one of 14. to 16., further including a means (4) for reducing at least a part of manganese oxide contained in a molten slag by-produced in the means (2) with a reductant containing silicon-containing ferroalloy or metal aluminum or a reductant containing silicon-containing ferroalloy and metal aluminum.

### Effect of Invention

According to the method of the present invention, the effect that the CO₂ emission amount in the production of the manganese-based alloy can be significantly reduced is exhibited by hydrogen reduction of manganese ions contained in manganese ore. According to the production apparatus of the present invention, the effect that the CO₂ emission amount in the manganese-based alloy production can be substantially reduced or the CO₂ emission amount can be made substantially zero.

### BRIEF DESCRIPTION OF DRAWINGS

Fig. 1 shows a temperature dependency of a Gibbs free energy 6G (chemical potential)of each reaction.
Fig. 2 shows a CO₂ reduction effect (decreasing effect of CO₂-emission) when hydrogen reduction is introduced in the production of a manganese-based alloy by simplifying ore (MnO₂).
Fig. 3 is a view for describing that when manganese ore is subjected to carbon-reduction, the reduction is performed until the content of Mn in a slag reaches 0%, and a manganese-based alloy with an increased Mn yield is not produced.
Fig. 4 shows a result of calculating a CO₂ reduction effect on the assumption that 40% of the content of Mn is produced as metal manganese (manganese-based alloy) from manganese ore containing 50% Mn and a slag containing 30% Mn (Mn in the slag: 30%) is discharged.
Fig. 5 shows a result of calculating a CO₂ reduction effect on the assumption that 40% of the content of Mn is produced as metal manganese (manganese-based alloy) from manganese ore containing 50% Mn and a slag containing 30% Mn (Mn in the slag: 30%) is discharged (when respective cases are put together into one reaction formula).
Fig. 6 shows an influence of a Mn grade of manganese ore and an amount of Mn in a slag on a CO₂ reduction effect.
Fig. 7 shows an influence of a manganese-based alloy production amount and an amount of Mn in a slag on a CO₂ reduction effect.
Fig. 8 shows an influence of a manganese ore reduction degree by hydrogen reduction (Mn oxidation degree of reduced Mn ore) on a CO₂ reduction effect.
Fig. 9 shows a configuration flow of a conventional manganese-based alloy production apparatus.
Fig. 10 shows a configuration flow of a manganese-based alloy production apparatus of the present invention.
Fig. 11 shows confirmation of hydrogen reduction by thermogravimetric change of manganese ore.

### DESCRIPTION OF EMBODIMENTS

Hereinafter, the present invention will be described. The present invention is not limited only to the following embodiments. In the present description, the phrase "X to Y" indicating a range means "X or more and Y or less". Unless otherwise specified, operations and measurements of physical properties and the like are performed under the conditions of room temperature (20 to 25°C)/relative humidity of 40 to 50% RH. "%" described in the present specification is all mass% (wt%) except for specific cases for example, "mol% (vol%)".

In an embodiment of the present invention, there is provided a method for producing a CO₂ emission-reducing(decreasing) manganese-based alloy, including a step (1) of subjecting manganese ore to hydrogen-reduction by heating it to produce reduced manganese ore.

A raw material of a manganese-based alloy, for example, manganese ore is usually tetravalent manganese (corresponding to MnO₂). When a carbon material such as coke is charged together with manganese ore as a reducing material (reductant) into an arc furnace (submerged arc furnace, SAF) and reduced from tetravalent manganese (ore) to zero-valent metal manganese (manganese-based alloy), a considerable amount of carbon dioxide is discharged even if a reduction reaction theoretically efficiently occurs.

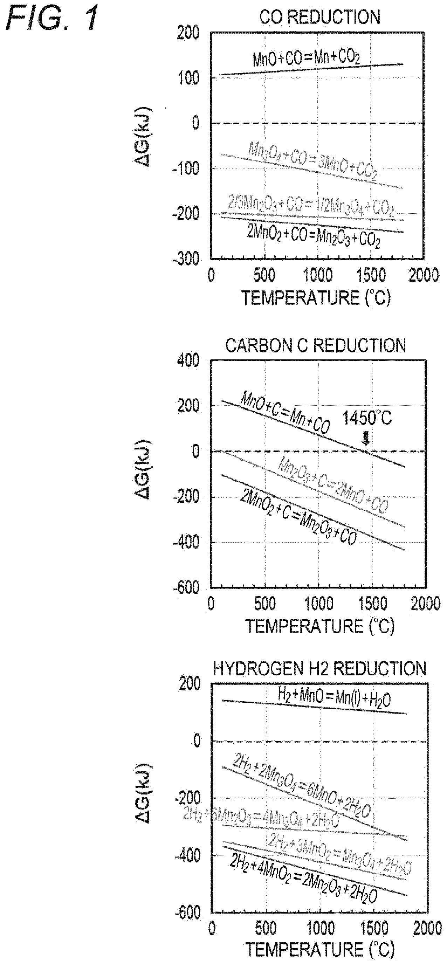

Incidentally, the inventors have considered the reduction of manganese ore from the thermodynamic viewpoint, and have determined that a reductant capable of reducing tetravalent manganese (corresponding to MnO₂) to divalent manganese (corresponding to MnO) is carbon C, carbon monoxide CO, hydrogen H₂, or the like (Fig. 1). Only carbon C can be reduced from divalent manganese (corresponding to MnO) to zero-valent manganese (metal Mn) (Fig. 1). It can be reduced to metal manganese in a condition of 1450°C or higher even if using carbon C.

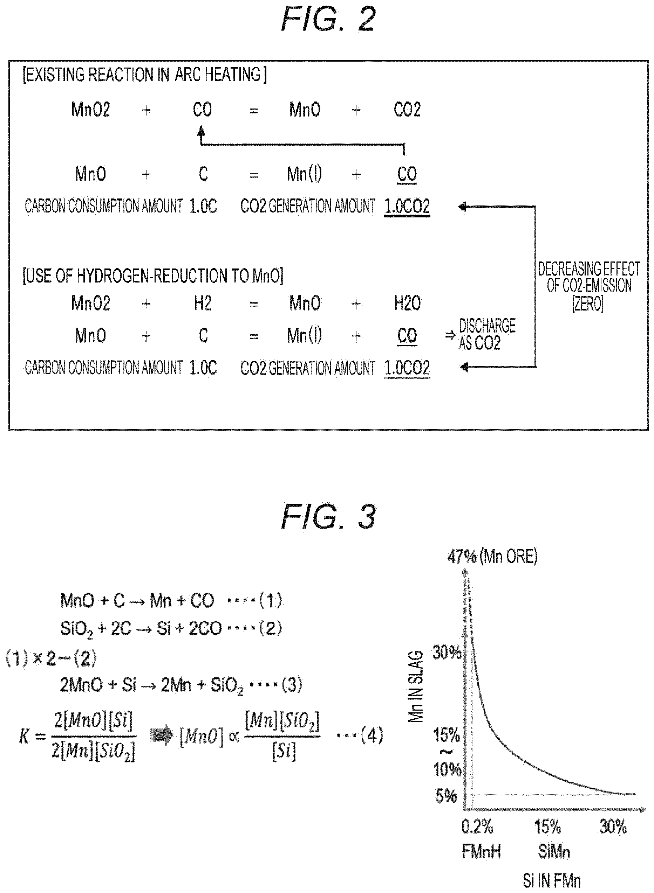

Subsequently, assuming that manganese ore is simply considered as MnO₂, the CO₂ reduction effect when manganese ore is subjected to hydrogen-reduction in the process of producing a manganese-based alloy is investigated (Fig. 2). Even when a reductant that does not generate CO₂, for example, hydrogen is used for reduction from tetravalent manganese (corresponding to MnO₂) to divalent manganese (corresponding to MnO), since only carbon C can be reduced from divalent manganese (corresponding to MnO) to zero-valent manganese (metal Mn) as described above, 1 mol of carbon C is required to produce metal Mn of 1 mol of manganese Mn, and thus the CO₂ reduction effect is zero.

As described above, even when the manganese ore is subjected to hydrogen-reduction, the CO₂ reduction effect is considered to be zero in the first place, and there is also considered a disadvantage such as a possibility that a new apparatus or facility is further required, so that those skilled in the art do not reach an idea of using hydrogen for preliminary reduction.

On the other hand, the present inventors have found that when a manganese-based alloy (particularly, ferromanganese) is produced by controlling the content of Mn in a slag discharged from manganese ore to, for example, around 30%, the CO₂ reduction effect can be obtained due to subjecting manganese ore to hydrogen-reduction in advance. In this way, the present inventors have conceived an idea that it is possible to actively reduce CO₂ emission by hydrogen-reduction to manganese having a valence number of less than 4 with hydrogen and have reached the present invention. The existence form of Mn in the slag is considered to be dispersed as a solid solution with Mn²⁺ ions and/or as MnO oxide. The existence form can be observed with an electron microscope.

In a preferred embodiment, when the reduced manganese ore is subjected to carbon-reduction, the reduction is controlled not to be performed until the content of Mn in the slag reaches 0%. The reason for this is as follows. That is, since the manganese ore contains a slag component (silica SiO₂, silicate), that is, in the coexistence of MnO-SiO₂, Reactions represented by Reaction Formula (1) and Reaction Formula (2) in Fig. 3 occur, and thus the relationship shown in the Formula (4) is derived from the equilibrium formula of Reaction Formula (3) defined as "Formula (1) × 2 - Formula (2)". In Formula (4), the [Si] concentration should be increased in order to decrease the [MnO] concentration, that is, to increase the Mn yield. In this way, the relationship between Mn in the slag and Si in the manganese-based alloy (Si in ferromanganeseFMn) is as shown in the graph, and when the amount of Mn in the slag is decreased to excessively increase the Mn yield, the content of Si in the manganese-based alloy to be obtained is increased. Therefore, in order to produce a manganese-based alloy from manganese ore so as not to excessively increase the content of Si in the manganese-based alloy, the amount of Mn in the slag may be controlled to, for example, about 30%.

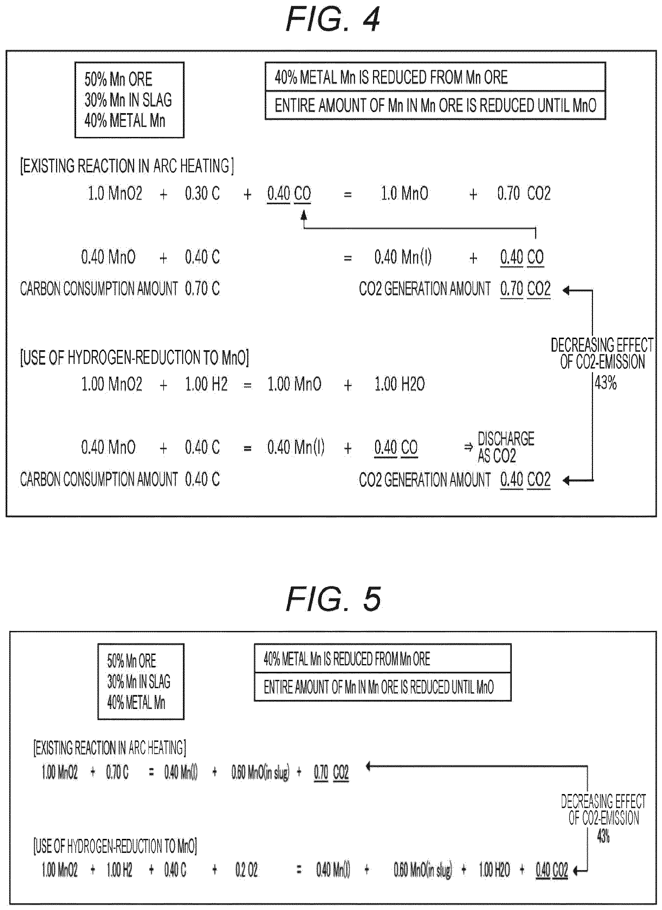

The present inventors have found that such ingenuity can result in a CO₂ reduction effect when the manganese ore is subjected to hydrogen reduction in advance (Figs. 4 and 5). In Fig. 4, as an example, a CO₂ reduction effect is calculated on the assumption (model) that 40% of the content of Mn is produced as metal manganese (manganese-based alloy) and a slag containing 30% Mn (Mn in the slag: 30%) is discharged from manganese ore containing 50% Mn (Mn grade). First, all manganese (50%) contained in the manganese ore is reduced to MnO. According to the coke (carbon) reduction method using an existing arc furnace, carbon C (coke) and carbon monoxide CO are used as reducing materials at a ratio of 0.3 : 0.4. As the carbon monoxide CO, carbon monoxide CO generated by reacting carbon C necessary for producing 50% of metal manganese (manganese-based alloy) from MnO is used. Therefore, 0.7 mol of CO₂ is generated with respect to 1 mol of MnO₂.

On the other hand, preferably, when hydrogen-reduction is used for reduction to MnO, manganese (50%) contained in the manganese ore does not generate CO₂ at that time. In other words, when hydrogen-reduction is used for reduction from MnO₂ to MnO, all manganese contained in the manganese ore is reduced to MnO, but CO₂ is not generated at that time. Among the manganese in the hydrogen-reduced manganese ore, 40% of the manganese is subjected to coke (carbon) reduction to metal manganese (manganese-based alloy), and carbon monoxide CO corresponding to the amount of carbon described above is generated. The generated carbon monoxide CO is combusted (reacted with oxygen O₂) and discharged as carbon dioxide CO₂. Therefore, 0.4 mol of CO₂ is generated with respect to 1 mol of MnO₂.

Therefore, according to the above model, a 43% CO₂ reduction effect can be obtained by hydrogen-reduction to MnO with respect to the amount of CO₂ generated in the existing reaction in the arc furnace. In Fig. 5, respective cases are represented by one reaction formula.

That is, as described in Fig. 3, the mechanism by which the CO₂ reduction effect can be obtained can be realized by intentionally not reducing all the manganese contained in the manganese ore to metal manganese to produce a manganese-based alloy. The reduction effect can be obtained by subjecting all the manganese in the manganese ore to hydrogen-reduction to obtain manganese having a valence number of less than 4, hydrogen-reduction to obtain divalent manganese (manganese oxidation degree: 1.0), or hydrogen-reduction to obtain a valence number of near 2 so as to obtain reduced manganese ore, and then partially or entirely reducing the reduced manganese ore to metal manganese so as to produce a manganese-based alloy.

Therefore, by including the step (1) of subjecting heated manganese ore to hydrogen-reduction to obtain reduced manganese ore, it is possible to provide a method for producing a manganese-based alloy capable of further reducing CO₂-emission as compared with carbon dioxide CO₂ generated in a conventional method for producing a manganese-based alloy.

According to an embodiment of the present invention, a step (1) of subjecting heated manganese ore to hydrogen-reduction to produce reduced manganese ore and a step (2) of charging the reduced manganese ore together with a carbon material into an arc furnace to perform refining (smelting), and then performing slag-metal separation (separation into slag and metal) are combined. The step (1) and the step (2) may be performed in the same reaction vessel (reactor) or in respective reaction vessels (reactors) separated from each other. The respective reaction vessels (respective reactors) separated from each other may be connected or may not be connected directly.

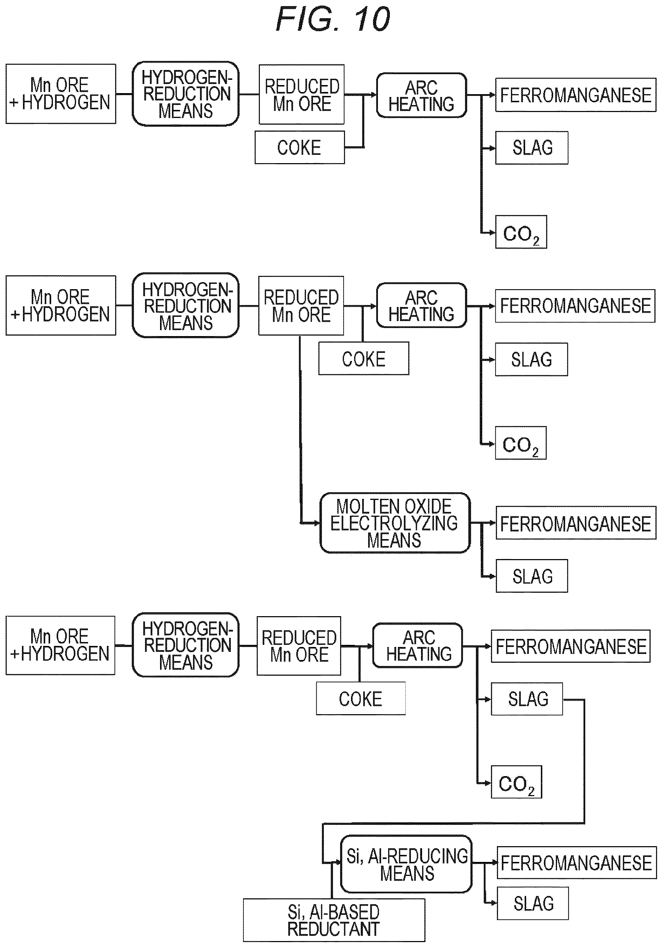

Since a substance generated in the step (2) is basically carbon monoxide CO (in Fig. 10, carbon dioxide CO₂ is indicated as the final emission form, and the description of oxidation (combustion) of carbon monoxide CO is omitted), the carbon monoxide CO generated here may be used together with hydrogen for reduction in the step (1).

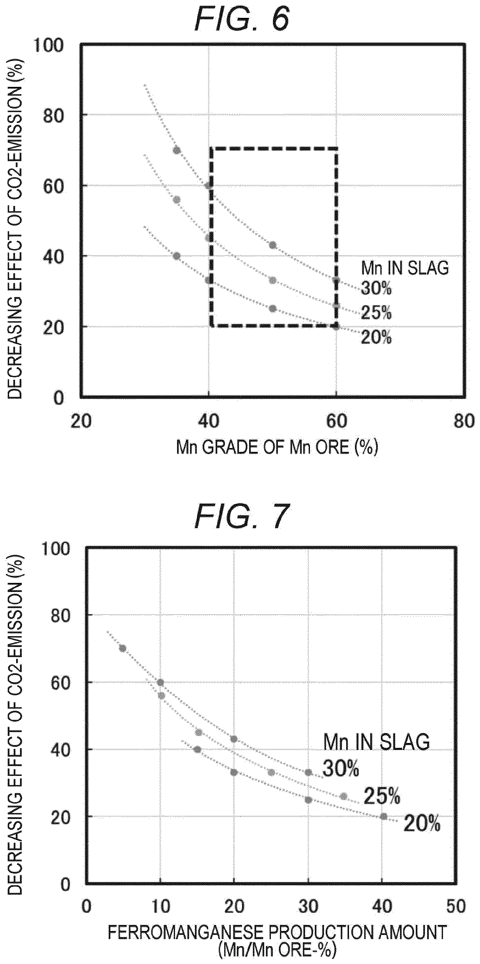

The CO₂ reduction effect in the present invention is based on the above-described CO₂ reduction mechanism, and thus has a relationship shown in Fig. 6. Fig. 6 is derived by transforming the reaction formula described in Fig. 4 to have a desired Mn grade in the ore and a desired amount of Mn in the slag and plotting the percentage of the reduction effect corresponding thereto. That is, regarding the Mn grade (Mn content) of the manganese ore, the CO₂ reduction effect tends to be higher as the Mn grade is lower; in other words, the CO₂ reduction effect tends to be lower as the Mn grade is higher. The CO₂ reduction effect tends to be higher as the amount of Mn in the slag is larger with respect to the amount of Mn remaining in the slag. In other words, the CO₂ reduction effect tends to be lower as the amount of Mn in the slag is smaller. By including the step (1) of subjecting heated manganese ore to hydrogen-reduction to produce reduced manganese ore, the CO₂ reduction effect can be exhibited, but as described above, the CO₂ reduction effect differs depending on the Mn grade of the manganese ore and the amount of Mn in the slag. After all, the more manganese-based alloys are efficiently produced from manganese ore, the lower the CO₂ reduction effect is. Therefore, from the viewpoint of securing a certain degree of productivity and obtaining the CO₂ reduction effect, preferably, the Mn grade of the manganese ore is set to, for example, 40 to 60%. Within this range, about 20 to 70% of the CO₂ reduction effect can be obtained. According to one embodiment, the Mn grade of the manganese ore is 20% or more, 25% or more, 31% or more, 32% or more, 35% or more, 38% or more, 40% or more, 45% or more, or 46% or more. According to one embodiment, the Mn grade of the manganese ore is 80% or less, 68% or less, 60% or less, 55% or less, 54% or less, 50% or less, 49% or less, or 48% or less.

According to one embodiment, the amount of Mn in the slag is 0.1% or more, 1% or more, 5% or more, 10% or more, 20% or more, 25% or more, or 26% or more. According to one embodiment, the amount of Mn in the slag is 35% or less, 31% or less, 30% or less, or 29% or less.

Fig. 7 shows an influence of a manganese-based alloy production amount (ratio of production of a manganese-based alloy (ferromanganese) from manganese ore, Mn/Mn ore-%) on a CO₂ reduction effect. Fig. 7 is derived by transforming the reaction formula described in Fig. 4 to have a desired amount of Mn in the slag and a desired manganese production amount (manganese production ratio) and plotting the percentage of the reduction effect corresponding thereto. It can be seen from Fig. 7 that there is a tendency similar to that in Fig. 6. According to a preferred embodiment, the manganese-based alloy production amount is 5 to 50%, 5 to 40%, or 10 to 30%.

The manganese oxidation degree (Mn oxidation degree) will be described. When expressed by the composition formula MnOₓ, the value of x is the manganese oxidation degree, for example, the manganese oxidation degree x = 2 is MnO₂, and the manganese oxidation degree x = 1 is MnO. Therefore, as the manganese oxidation degree of the manganese ore or the reduced manganese ore, x of MnOₓ is determined from the value of the total amount of manganese (Mn%, JIS M 8232:2005, Manganese ores-Methods for determination of manganese content) and the value of effective oxygen of the manganese oxide (MnO₂%, JIS M 8233:1995, Manganese ores-Methods for determination of active oxygen content), and is defined as the manganese oxidation degree.

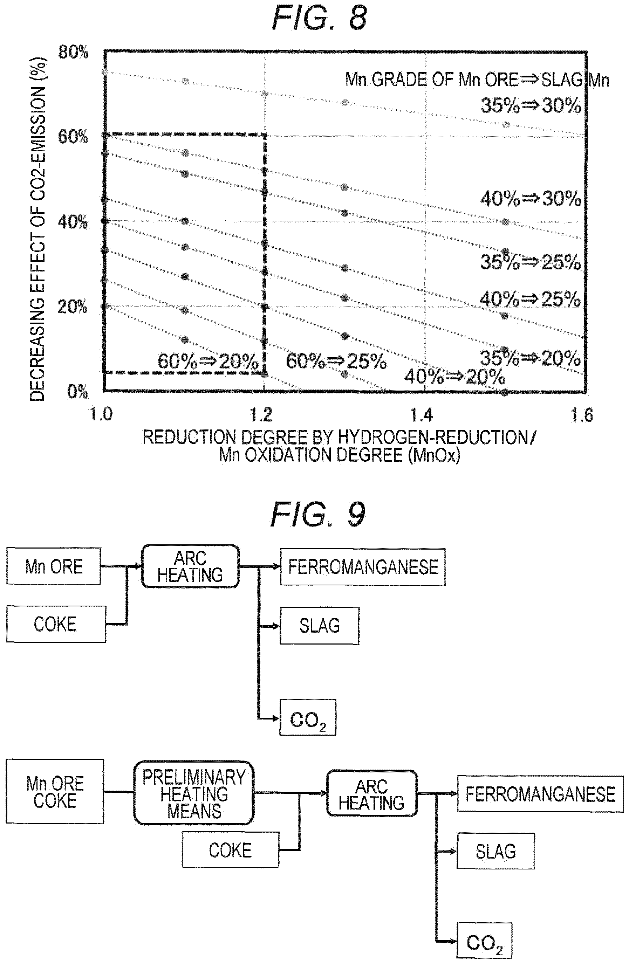

Fig. 8 shows an influence of a reduction degree of manganese ore by hydrogen-reduction, that is, a manganese oxidation degree of reduced manganese ore on a CO₂ reduction effect. Fig. 8 is derived by transforming the reaction formula described in Fig. 4 to have a desired oxidation degree, a desired Mn grade, and a desired amount of Mn in the slag and plotting the percentage of the reduction effect corresponding thereto. It is premised that the manganese oxidation degree in the reduced manganese ore is less than 2, but as shown in Fig. 8, the CO₂ reduction effect decreases as the manganese oxidation degree increases. In other words, as the manganese oxidation degree decreases and approaches 1.0, the CO₂ reduction effect increases. In order to secure the production amount of the manganese-based alloy and obtain a more effective CO₂ reduction effect, in the step (1), reduced manganese ore having a manganese oxidation degree of 1.6 or less is preferable, and reduced manganese ore having a manganese oxidation degree of more preferably 1.5 or less, further preferably 1.2 or less, and still more preferably 1.1 or less is preferable. When the manganese oxidation degree of the manganese ore to be subjected to hydrogen-reduction is already less than 2.0, the manganese oxidation degree of the reduced manganese ore is controlled to be less than the manganese oxidation degree of the manganese ore of the raw material. According to a preferred embodiment, when the manganese oxidation degree of the manganese ore is regarded as 100%, the manganese ore is reduced so that the manganese oxidation degree is 80% or less, 75% or less, or 70% or less. The manganese oxidation degree of the reduced manganese ore is controlled to preferably 1.6 or less, 1.5 or less, 1.2 or less, 1.15 or less, or 1.1 or less, regardless of the manganese oxidation degree of the manganese ore of the raw material.

Regarding the hydrogen-reduction of the manganese ore, a reductant serving as a CO₂ generation source, for example, CO or a carbon material may be contained within a range in which a CO₂ reduction effect can be obtained as long as hydrogen is contained.

The reductant can be divided into a gas (gaseous) form and a solid form.

According to a preferred embodiment, the proportion of hydrogen in the gas of the reductant is 50 mol% or more, further preferably 70 mol% or more, still more preferably more than 70 mol%, still more preferably 90 mol% or more, still more preferably 95 mol% or more, still more preferably 99 mol% or more, and still more preferably 100 mol%. The proportion of CO in the gas of the reductant is 30 mol% or less, less than 30 mol%, 10 mol% or less, 5 mol% or less, 1 mol% or less, or 0 mol%.

According to a preferred embodiment, the amount (ratio) of the solid reductant (reductant serving as a CO₂ generation source (for example, a carbon material (coke)) with respect to the manganese ore is 20 wt% or less, 10 wt% or less, 8 wt% or less, an impurity level, or 0 wt%. According to a preferred embodiment, the impurity level means that the amount of the reductant serving as a CO₂ generation source is 1000 ppm by weight or less. As described above, according to a preferred embodiment, the reductant does not contain CO or a carbon material.

Nitrogen, water vapor, CO₂, argon, helium, oxygen, nitrogen oxide, and the like may be contained as a gas other than the reductant in the hydrogen-reduction. The content of hydrogen in the hydrogen-reduction is sufficient as long as the manganese ore can be reduced to a target oxidation degree, but when the supply amount of a hydrogen-containing gas corresponding to the treatment amount of the manganese ore is considered, for example, the content thereof is 1 mol% or more, 2 mol% or more, 3 mol% or more, or 4 mol% or more in all the gases (that is, the gas of the reductant and the gas other than the reductant). From the viewpoint of more efficient reduction, the content of hydrogen may be set to more than 4 mol%. According to a preferred embodiment, the content of hydrogen is 10 mol% or less, 9 mol% or less, 8 mol% or less, 7 mol% or less, 6 mol% or less, 5 mol% or less, 4 mol% or less, 3 mol% or less, or 2 mol% or less.

As will be described later, according to a preferred embodiment, the temperature in the hydrogen-reduction is 600°C or higher, 800°C or higher, or 900°C or higher. According to a preferred embodiment, the temperature in the hydrogen-reduction is 1200°C or lower, 1100°C or lower, or 1000°C or lower. According to a preferred embodiment, the time for the hydrogen-reduction is 0.5 hours or longer, 1.0 hour or longer, or 2.0 hours or longer. According to a preferred embodiment, the time for the hydrogen-reduction is 10 hours or shorter, 5 hours or shorter, or 3 hours or shorter.

According to a preferred embodiment, the introduction amount of the hydrogen-containing gas with respect to the amount of the manganese ore is, as a guide, 1.0 time to 3.1 times, 1.05 times to 1.9 times, or 1.1 times to 1.4 times the amount of hydrogen necessary for reduction to a desired manganese oxidation degree.

According to one embodiment, the manganese oxidation degree of the reduced manganese ore is 1.0 to 1.5, the Mn grade of the manganese ore is 40 to 60%, and the amount of Mn in the slag is 20 to 31%. According to one embodiment, the manganese oxidation degree of the reduced manganese ore is 1.0 to 1.2, the Mn grade of the manganese ore is 40 to 55%, and the amount of Mn in the slag is 25 to 31%. According to one embodiment, the manganese oxidation degree of the reduced manganese ore is 1.0 to 1.15, the Mn grade of the manganese ore is 45 to 54%, and the amount of Mn in the slag is 25 to 30%. According to one embodiment, the manganese oxidation degree of the reduced manganese ore is 1.0 to 1.1, the Mn grade of the manganese ore is 46 to 54%, and the amount of Mn in the slag is 26 to 29%.

According to a preferred embodiment, when hydrogen-reduction to MnO is performed, a CO₂ reduction effect of preferably 10% or more, more preferably 20% or more, further preferably 30% or more can be obtained with respect to the amount of CO₂ generated in the existing reaction in the arc furnace shown in Fig. 4.

According to a preferred embodiment, a manganese-based alloy is produced through a step (2) of charging the reduced manganese ore produced in the step (1) together with a carbon material into an arc furnace to perform smelting (refining), and then performing slag-metal separation. The arc furnace may be a conventional submerged-arc furnace or an arc furnace equivalent thereto, and is used for heating the inside of the furnace mainly by electric power and reducing the reduced manganese ore to metal manganese (manganese-based alloy) mainly by the carbon material. When the smelting (refining) proceeds in the arc furnace, the molten slag and the molten manganese-based alloy are formed, and the molten manganese-based alloy is disposed at the furnace bottom and the molten slag is disposed on the manganese-based alloy due to a difference in specific gravity between the manganese-based alloy and the molten slag. Therefore, the slag and the metal are separated and discharged from the inside of the arc furnace by a difference in tap timing, a difference in height of the tap port, and the like. In the manganese-based alloy produced using the carbon material in this manner, ferromanganese containing carbon is obtained, and decarburization may be subsequently performed depending on the application. This embodiment is schematically shown in the upper flow of Fig. 10.

According to a preferred embodiment, a step (3) of smelting (refining) a part or all of the reduced manganese ore produced in the step (1) by molten oxide electrolysis, and then performing slag-metal separation may be provided. The molten oxide electrolysis is a method for electrolytically producing metal manganese (manganese-based alloy) in a molten state by melting the reduced manganese ore and bringing two electrodes of an anode and a cathode into contact with the molten body to apply a voltage capable of reducing divalent manganese to zero-valent manganese (metal manganese). The heat source for melting the reduced manganese ore can also be electric power heating, and Joule heating generated from the current flowing between the electrodes can be also used, or a heat source can also be separately prepared. In a manganese-based alloy produced without using a carbon material in this way, ferromanganese or metal manganese containing almost no carbon is obtained. This embodiment is schematically shown in the middle flow of Fig. 10.

The heating (heated) in the step (1) may be performed by any heating method as long as the manganese ore can be heated to a temperature at which hydrogen-reduction can be performed, but a heating method capable of decreasing the carbon dioxide CO₂-emission amount is more preferable. For example, it is preferable that the heating in the step (1) is electric (Joule) heating from the viewpoint that the carbon dioxide CO₂-emission amount can be decreased. It is preferable that the heating in the step (1) is heating by hydrogen combustion from the viewpoint that the carbon dioxide CO₂ emission amount can be decreased and the viewpoint that the heating can be performed simultaneously with hydrogen supply.

By including a step (4) of reducing at least a part of manganese oxide contained in a molten slag by-produced in the step (2) with a reductant containing silicon-containing ferroalloy or metal aluminum or reductants containing both silicon-containing ferroalloy and metal aluminum to produce a manganese-based ferroalloy, manganese remaining in the slag can be recovered, and thus productivity is further improved. In the manganese-based alloy produced from the Mn-containing slag without using a carbon material in this way, ferromanganese or metal manganese containing almost no carbon is obtained. This embodiment is schematically shown in the lower flow of Fig. 10.

As the carbon material in the step (2), conventional coke may be used, but the carbon dioxide CO₂ reduction effect is further improved by green carbonizing a part or all of the coke. Examples of the green carbon include biocarbon (biological carbon materials such as charcoal and bamboo charcoal), waste plastic-utilized coke, fuel-derived carbon materials obtained from hydrogen and carbon dioxide synthesized by renewable energy, green coke synthesized by utilizing renewable energy, and the like.

A part or all of the carbon material in the step (2) may be granulated together with the reduced manganese ore produced in the step (1) as being pellets incorporated with the carbon material and charged into an arc furnace. By forming the pellets incorporated with the carbon material as described above, the reduction reaction and the gas release in the arc furnace may be further improved, so that stable operation may be easily performed and the carbon material consumption rate may be improved.

The dust generated in the step (1) and the carbon material may be granulated together as being pellets incorporated with the carbon material and charged into an arc furnace. The product crushed waste of the manganese-based alloy and the falling ore powder of the raw material manganese ore may be contained in the pellets incorporated with the carbon material.

The pellets incorporated with the carbon material described above are more effective when green carbon is used, and when the carbon material used in the pellets incorporated with the carbon material is green carbon, the green carbon can more efficiently act as a reducing agent (reductant).

Examples of the granulation method for forming pellets incorporated with the carbon material include a pellet method, a briquette method, an extrusion molding method, and the like in which an ordinary method can be employed.

In the step (2), a slag forming flux (slag adjusting agent) can be charged into the arc furnace. The slag forming flux can control properties such as viscosity, oxygen potential, and basicity of the slag, and examples thereof include lime, slaked lime, Na₂CO₃, CaCl₂, MgCO₂, and the like.

A manganese-based ferroalloy can also be produced by a step (5) of reducing a part or all of the reduced manganese ore produced in the step (1) with a reducing material containing silicon-containing ferroalloy or metal aluminum or reductants containing both silicon-containing ferroalloy and metal aluminum to perform smelting (refining), and then performing slag-metal separation. In the manganese-based alloy produced from the Mn-containing slag without using a carbon material in this way, ferromanganese or metal manganese containing almost no carbon is obtained.

An apparatus for producing a manganese-based alloy for achieving the method for producing a manganese-based alloy as described above includes a means (1) for subjecting manganese ore to hydrogen reduction by heating to obtain reduced manganese ore, and a means (2) for charging the reduced manganese ore together with a carbon material into an arc furnace to perform smelting (refining), and then performing slag-metal separation.

It is more preferable that the apparatus for producing a manganese-based alloy further includes a means (3) for refining a part or all of the reduced manganese ore generated in the step (1) by molten oxide electrolysis, and then performing slag-metal separation.

It is more preferable that the apparatus for producing a manganese-based alloy further includes a means (4) for reducing at least a part of manganese oxide contained in a molten slag by-produced in the means (2) with a reductant containing silicon-containing ferroalloy or metal aluminum or both reductants containing silicon-containing ferroalloy and metal aluminum to produce a manganese-based ferroalloy.

### Examples

Hereinafter, an example in which manganese ore such as manganese ore produced in Gabon (Comilog) (manganese grade 52%) or manganese ore produced in South Africa (Assmang) (manganese grade 47%) is subjected to hydrogen reduction by heating to produce reduced manganese ore will be described. An industrial furnace capable of heating and performing hydrogen reduction, such as a fluidized-bed furnace, a shaft furnace, or a rotary kiln furnace, is applied, but experimentally, reduced manganese ore is obtained by performing heating in a tubular furnace and supplying a hydrogen-containing gas to reduce manganese ore. As an example, manganese ore produced in Gabon (containing MnO₂) is put in an alumina boat and charged into a tubular furnace, and heated at 900°C for 1 hour while flowing a 4 mol% hydrogen/nitrogen gas to obtain reduced manganese ore. When the manganese oxidation degree of the obtained reduced manganese ore is measured and calculated based on the above-described measurement method (JIS M 8232, JIS M 8233), the manganese oxidation degree is 1.0. The same result is obtained using manganese ore produced in South Africa (Assmang).

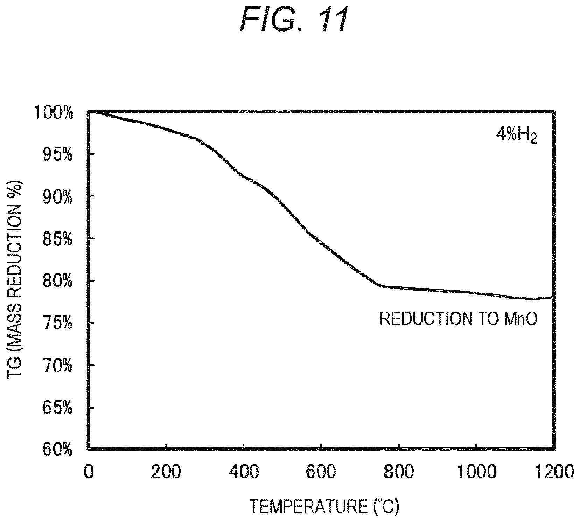

When thermal mass spectrometry of the manganese ore is performed while a 4 mol% hydrogen/nitrogen mixed gas is flowed, a mass reduction due to reduction of manganese can be confirmed as shown in Fig. 11. It is found that hydrogen-reduction can be performed by heating to about 800°C or higher. When the temperature of the hydrogen-reduction is increased, the manganese ore is easily reduced, and for example, the reduction treatment time of the manganese ore is shortened, but when the temperature of the hydrogen-reduction is too high, the reduced manganese ores stick to each other (sintering or fusion solidification) and are solidified, so that the reduced manganese ore may be difficult to handle. From the above, the temperature of hydrogen-reduction is preferably 1200°C or lower and more preferably 1100°C or lower.

The hydrogen concentration in the hydrogen-reduction is sufficient to be 4 mol% as described above, but may be more than 4 mol% for more efficient reduction. On the other hand, reduction can be sufficiently performed even at a hydrogen concentration of about 1 mol%, but the hydrogen concentration is preferably 1 mol% or more in consideration of the supply amount of the hydrogen-containing gas corresponding to the treatment amount of the manganese ore.

Examples of more industrial hydrogen-reduction experiments include an experiment of hydrogen-reduction of manganese ore using an external thermal rotary kiln. Reduced manganese ore is obtained by introducing a 4 mol% hydrogen/nitrogen mixed gas and subjecting the manganese ore to hydrogen-reduction by heating with the test kiln. For example, the treatment is performed at 900°C for 1 hour to obtain reduced manganese ore having a manganese oxidation degree of 1.1. The manganese oxidation degree of the reduced manganese ore can be varied by adjusting the introduction amount of the hydrogen-containing gas with respect to the amount of the manganese ore, the heating temperature, and the heating time. As the manganese oxidation degree of the reduced manganese ore is larger, the hydrogen-reduction treatment is performed for a shorter time or the amount of hydrogen used is smaller, but the CO₂ reduction effect is reduced. On the other hand, as the manganese oxidation degree of the reduced manganese ore decreases to 1.0 or approaches 1.0, the CO₂ reduction effect increases.

In this example, the amount of Mn in the slag may be 20 to 33%. The manganese-based alloy production amount may be 10 to 40%.

Next, an experiment for producing a manganese-based alloy by reducing the reduced manganese ore with a carbon material will be described. From the industrial point of view, the reduced manganese ore is reduced by the carbon material using a submerged-arc furnace or an electric furnace having a function equivalent thereto, but the following experiment will be described here.

The reduced manganese ore and coke as a carbon material are refined in a 100 kVA Girod furnace (single-phase arc furnace), tapping is performed to separate and take out a molten manganese-based alloy (ferromanganese) and a slag, thereby obtaining a manganese-based alloy. Although the amount of carbon monoxide CO (carbon dioxide CO₂) generated cannot be measured since the Girod furnace is a releasing furnace, a manganese-based alloy can be produced by reducing the reduced manganese ore with a carbon material and the amount of the carbon material is sufficient to be small since the oxygen content (manganese oxidation degree) of the reduced manganese ore serving as a raw material is small. From these points, the CO₂ reduction effect can be confirmed. The obtained manganese-based alloy (ferromanganese) satisfies JIS G 2301.

The reduced manganese ore and coke serving as a carbon material are mixed and placed in a refractory container, the mixture is subjected to electric heating to 1450°C or higher while circulating an inert carrier gas (nitrogen N₂ or argon Ar) in a vertical tubular furnace, and the concentration of carbon monoxide CO generated thus is measured, so that the amount of CO₂ generated by the reaction between the reduced manganese ore and the coke can be determined. On the other hand, normal manganese ore and coke are reacted under the same conditions as described above, and the amount of CO₂ generated is compared. From these points, the CO₂ reduction effect of the present invention is experimentally clear.

### Industrial Applicability

According to the present invention, it is possible to achieve a CO₂ reduction effect in the production of a manganese-based alloy, to contribute to suppression of global warming, and to meet requirements of carbon neutral and CO₂ zero emission.

## Claims

1. A method for producing a manganese-based alloy, comprising a step (1) of subjecting manganese ore to hydrogen-reduction by heating to produce reduced manganese ore.

2. The method for producing a manganese-based alloy according to claim 1, further comprising a step (2) of charging the reduced manganese ore together with a carbon material into an arc furnace to perform smelting, and then performing slag-metal separation.

3. The method for producing a manganese-based alloy according to claim 1 or 2, further comprising a step (3) of refining a part or all of the reduced manganese ore by molten oxide electrolysis, and then performing slag-metal separation.

4. The method for producing a manganese-based alloy according to any one of claims 1 to 3, wherein a manganese oxidation degree of the reduced manganese ore is 1.6 or less.

5. The method for producing a manganese-based alloy according to claim 4, wherein the manganese oxidation degree of the reduced manganese ore is 1.1 or less.

6. The method for producing a manganese-based alloy according to any one of claims 1 to 5, wherein a proportion of hydrogen in a gas of a reductant in the hydrogen-reduction is more than 70 mol%.

7. The method for producing a manganese-based alloy according to any one of claims 2 to 6, wherein an amount of Mn in the slag is 10% to 29%.

8. The method for producing a manganese-based alloy according to any one of claims 1 to 7, wherein the heating includes electric heating.

9. The method for producing a manganese-based alloy according to any one of claims 1 to 8, wherein the heating includes heating by hydrogen combustion.

10. The method for producing a manganese-based alloy according to any one of claims 2 to 9, further comprising a step (4) of reducing at least a part of manganese oxide contained in a molten slag by-produced in the step (2) with a reducing material containing silicon-containing alloy iron or metal aluminum or a reductant containing silicon-containing ferroalloy and metal aluminum.

11. The method for producing a manganese-based alloy according to any one of claims 1 to 10, further comprising a step (5) of reducing a part or all of the reduced manganese ore with a reductant containing silicon-containing ferroalloy or metal aluminum or a reducing material containing silicon-containing ferroalloy and metal aluminum to perform smelteing, and then performing slag-metal separation.

12. The method for producing a manganese-based alloy according to any one of claims 2 to 11, wherein a part or all of the carbon material is green carbon.

13. The method for producing a manganese-based alloy according to any one of claims 2 to 12, wherein a slag forming flux is charged in the step (2).

14. An apparatus for producing a manganese-based alloy, comprising a means (1) for subjecting manganese ore to hydrogen-reduction by heating.

15. The apparatus for producing a manganese-based alloy according to claim 14, further comprising a means (2) for charging the reduced manganese ore together with a carbon material into an arc furnace to perform smelting, and then performing slag-metal separation.

16. The apparatus for producing a manganese-based alloy according to claim 14 or 15, further comprising a means (3) for smelting a part or all of the reduced manganese ore by molten oxide electrolysis, and then performing slag-metal separation.

17. The apparatus for producing a manganese-based alloy according to any one of claims 14 to 16, further comprising a means (4) for reducing at least a part of manganese oxide contained in a molten slag by-produced in the means (2) with a reductant containing silicon-containing ferroalloy or metal aluminum or a reductant containing silicon-containing ferroalloy and metal aluminum.
